# EUROPEAN PATENT SPECIFICATION

(11) **EP 1 686 308 B1**
(45) Date of publication and mention of the grant of the patent: **07.03.2012**
(21) Application number: 06001440.4
(22) Date of filing: 24.01.2006
(51) Int. Cl.: F21S 8/10, F21V 5/00, F21V 5/04, G02B 3/08

(54) **Vehicle lighting device and vehicle headlamp unit including the lighting device**
Beleuchtungseinrichtung für ein Fahrzeug und Scheinwerfer mit einer solchen Beleuchtungseinrichtung
Dispositif d'éclairage pour un véhicule et projecteur comprenant un tel dispositif

(30) Priority: 31.01.2005 JP 2005024522
(43) Date of publication of application: 02.08.2006
(73) Proprietor: ICHIKOH INDUSTRIES, LTD., Tokyo 144-0022 (JP)
(72) Inventor: Suzuki, Yasufumi c/o Ichikoh Industries, Ltd., Isehara-shi, Kanagawa 259-1192, (JP); Ookubo, Yasuhiro c/o Ichikoh Industries, Ltd., Isehara-shi, Kanagawa 259-1192, (JP)
(74) Representative: Grünecker, Kinkeldey, Stockmair & Schwanhäusser

(56) References cited:
- EP-A- 0 949 449
- EP-A- 1 418 381
- EP-A- 1 515 368
- US-A- 4 670 095
- US-A1- 2004 196 663
- US-A1- 2004 208 020

## Description

### BACKGROUND OF THE INVENTION

### 1. Field of the Invention

The present invention relates to a vehicle lighting device that includes a semiconductor light-emitting device such as an LED or EL (including organic EL) as a light source, to thereby emit a spot-type light distribution pattern to be merged with a basic light distribution pattern emitted (irradiated, illuminated, projected) by a headlamp. The present invention also relates to a vehicle headlamp unit provided with the vehicle lighting device, so as to separately emit the basic light distribution pattern and the spot-type light distribution pattern and merge these patterns.

### 2. Description of the Related Art

The vehicle lighting device according to the preamble of claim 1 and the vehicle headlamp unit including the lighting device (hereinafter referred to as "vehicle headlamp system") are known from EP 1 418 381 A1.

US 2004/196663 A1 discloses a vehicle lighting device basically in conformity with the lighting device of EP 1 418 381 A1, wherein a plurality of light emitters is basically arranged in a single row.

US 2004/208020 A1 refers to a vehicle headlamp unit which comprises several vehicle lighting units, each comprising a semiconductor light source and a lens. The vehicle lighting devices are arranged in a row being offset to each other in a side direction, wherein the lenses have a different focal length resulting in an offset displacement of light emitters associated with predetermined vehicle lighting devices to light emitters associated with the other vehicle lighting devices.

An example of further vehicle headlamp system can be found in Japanese Published Unexamined Patent Application No. 2004-327188. Said conventional vehicle headlamp system will be explained in the following. The conventional vehicle headlamp system is provided with a light source composed of light emitting diodes in which three light emitting chips are disposed in a horizontal direction and a projection lens that projects images of the light source as inverted images. And, the middle light emitting chip is lighted when the vehicle runs straight, the right light emitting chip is lighted when the vehicle turns left, and the left light emitting chip is lighted when the vehicle turns right. Four light emitting chips are provided in some cases.

However, because the conventional vehicle headlamp system is provided by merely disposing three light emitting chips in a horizontal direction (see Fig. 5, Fig. 7A, and Fig. 7B), among images of the light emitting chips emitted from the projection lens, the contour of some images can lose shape so that a part of the images surpasses a cutoff line of a basic light distribution pattern (see Fig. 9 and Fig. 11). In this case, a glare may occur. As such, the conventional vehicle headlamp system has a problem.

### SUMMARY OF THE INVENTION

It is an object of the present invention to at least solve the problems in the conventional technology.

According to an aspect of the present invention, a vehicle lighting device according to claim 1 is proposed.

According to a further aspect of the present invention, a vehicle headlamp unit according to claim 11 is proposed.

Preferred embodiments of the present invention are subject to the dependent claims 2 to 8, 10 and 11, respectively.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

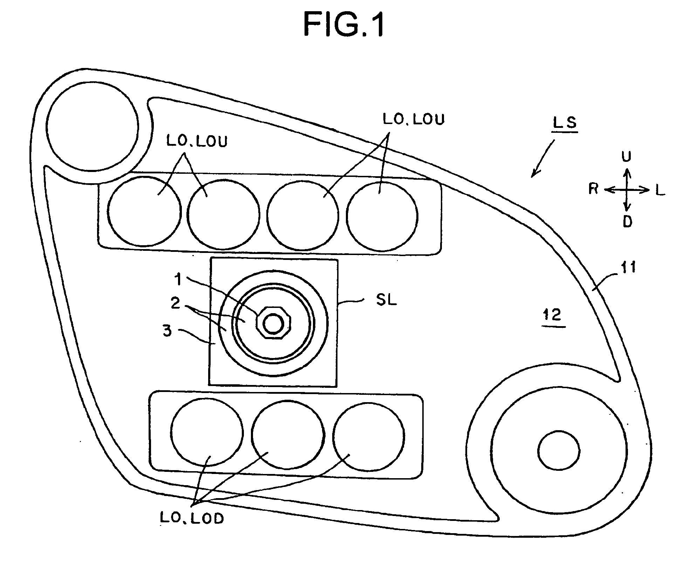

Fig. 1 is a front view of an embodiment of a vehicle headlamp system according to the present invention, with an outer lens removed;

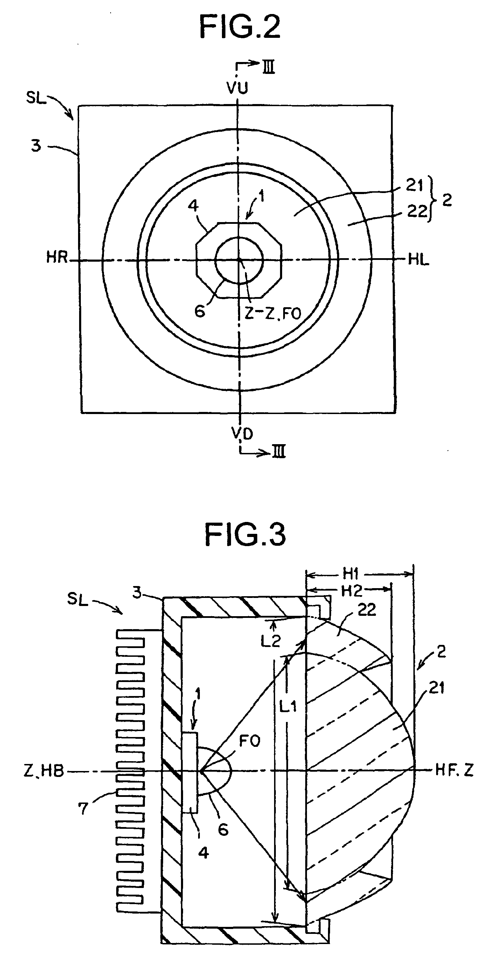

Fig. 2 is a front view of a spot lamp unit, likewise;
Fig. 3 is a cross-sectional view along a line III-III of Fig. 2;

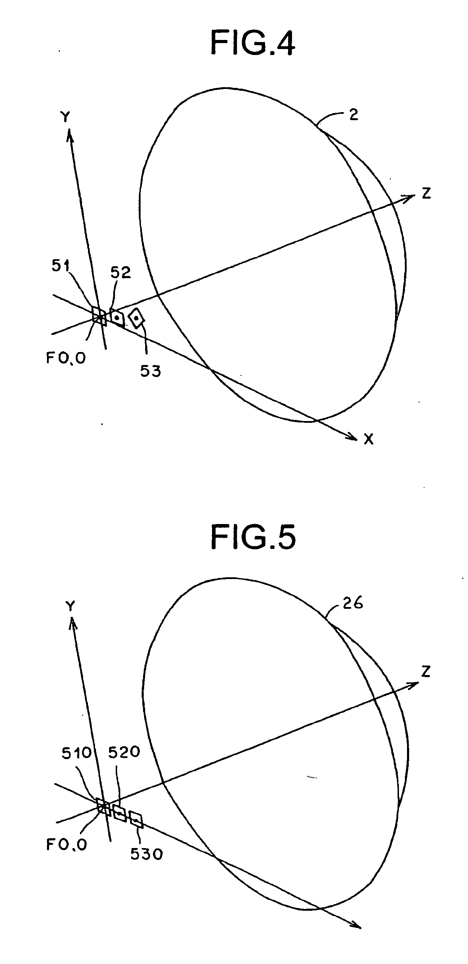

Fig. 4 is an explanatory drawing of a relative positional relationship between three light emitters and a lens, shown by three-dimensional coordinates, likewise;
Fig. 5 is an explanatory drawing of a relative positional relationship between three emitters and a lens of a conventional vehicle headlamp system, shown by three-dimensional coordinates;

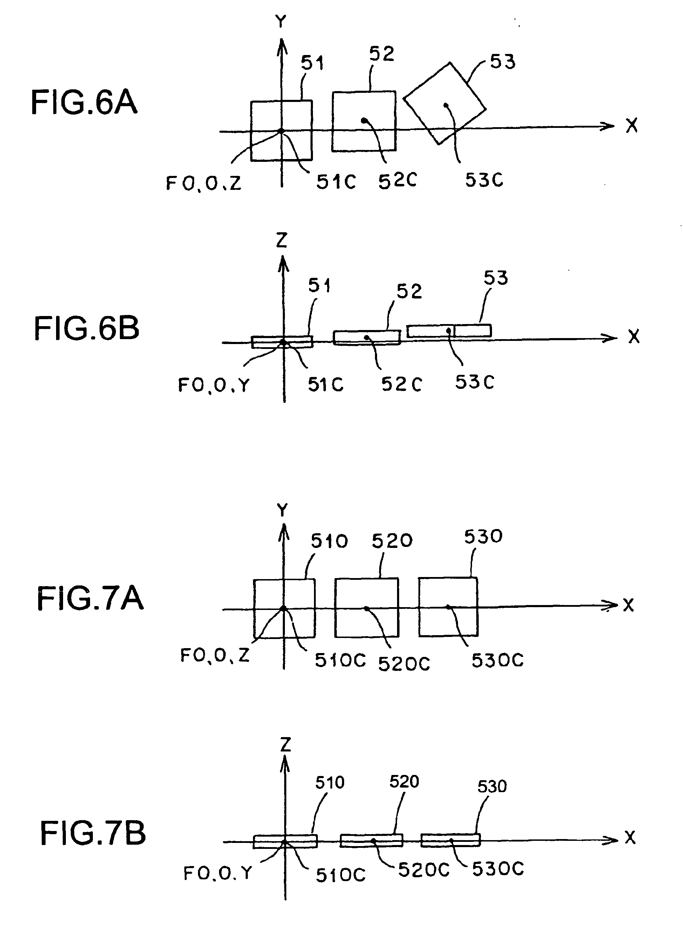

Fig. 6A and Fig. 6B are explanatory drawings of relative positional relationship among three light emitters, shown by three-dimensional coordinates, likewise;
Fig. 7A and Fig. 7B are explanatory drawings of a relative positional relationship among three light emitters of a conventional vehicle headlamp system, shown by three-dimensional coordinates;

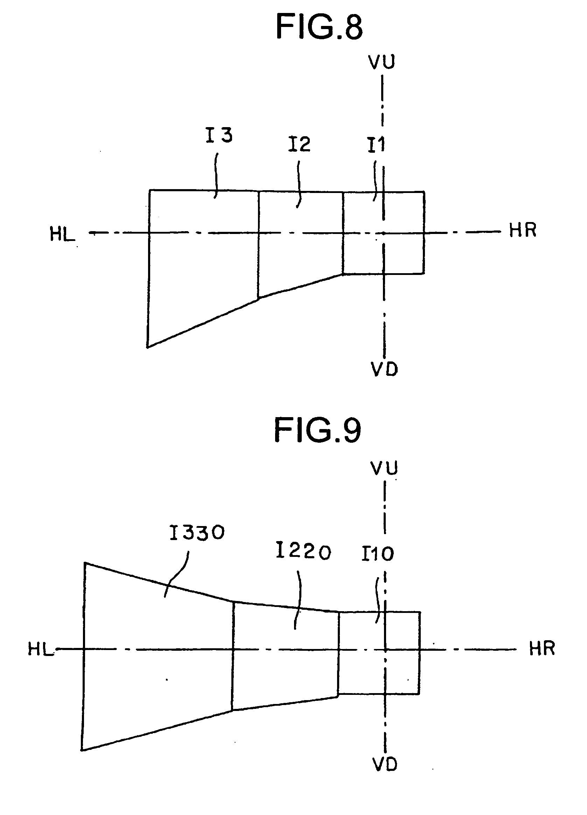

Fig. 8 is an explanatory drawing of images of three light emitters emitted from a lens, likewise;
Fig. 9 is an explanatory drawing of images of three light emitters emitted from a lens of a conventional vehicle headlamp system;

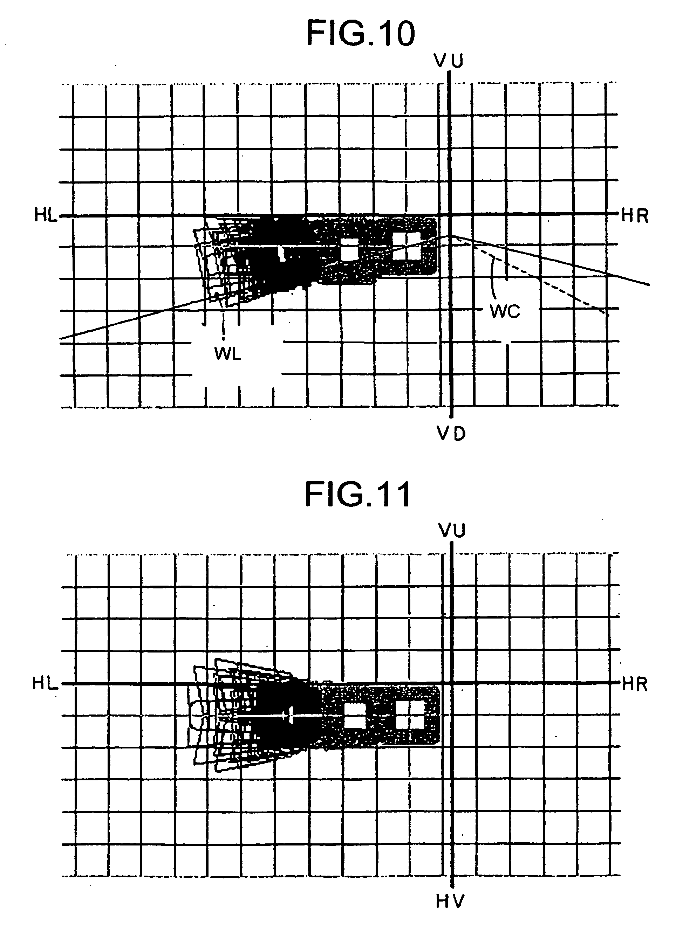

Fig. 10 is an explanatory drawing of a correlation between images of three light emitters emitted from a lens and a road;
Fig. 11 is an explanatory drawing of a correlation between images of three light emitters emitted from a lens and a road of a conventional vehicle headlamp system;

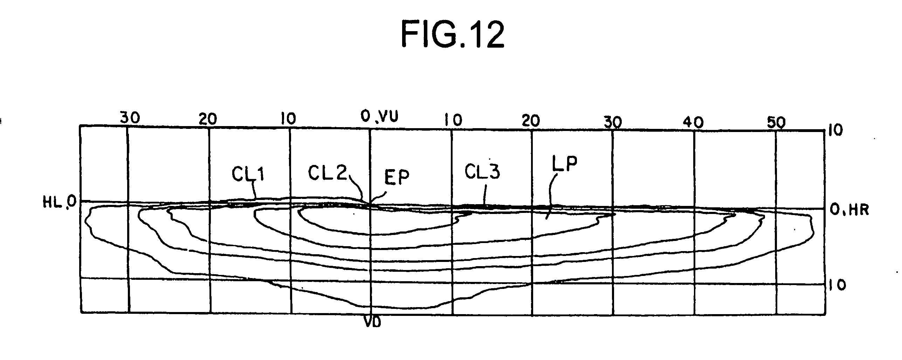

Fig. 12 is an explanatory graph of a passing light distribution pattern obtained by a headlamp unit, shown on a screen, likewise;

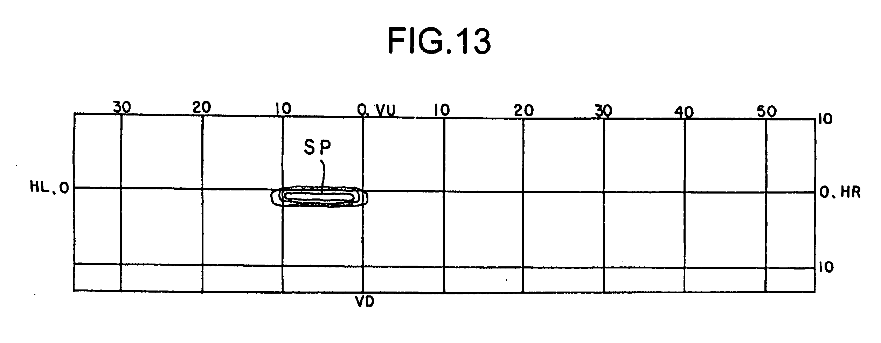

Fig. 13 is an explanatory graph of a spot-type light distribution pattern obtained by a spot lamp unit, shown on a screen, likewise;

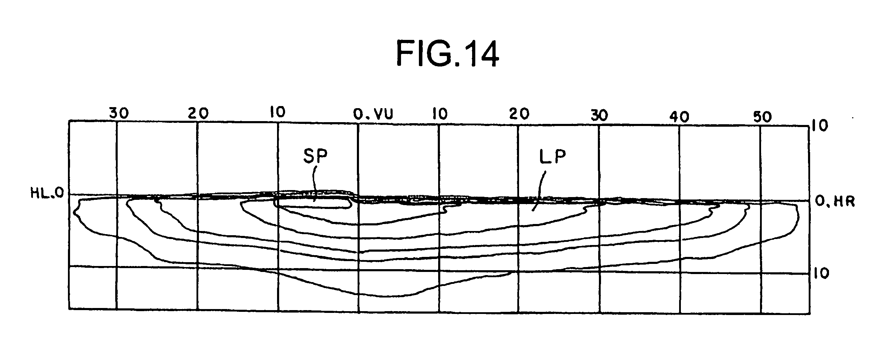

Fig. 14 is an explanatory graph of an ideal passing light distribution pattern provided by merging the passing light distribution pattern obtained by a headlamp unit of Fig. 12 and the spot-type light distribution pattern obtained by a spot lamp unit of Fig. 13, shown on a screen, likewise;

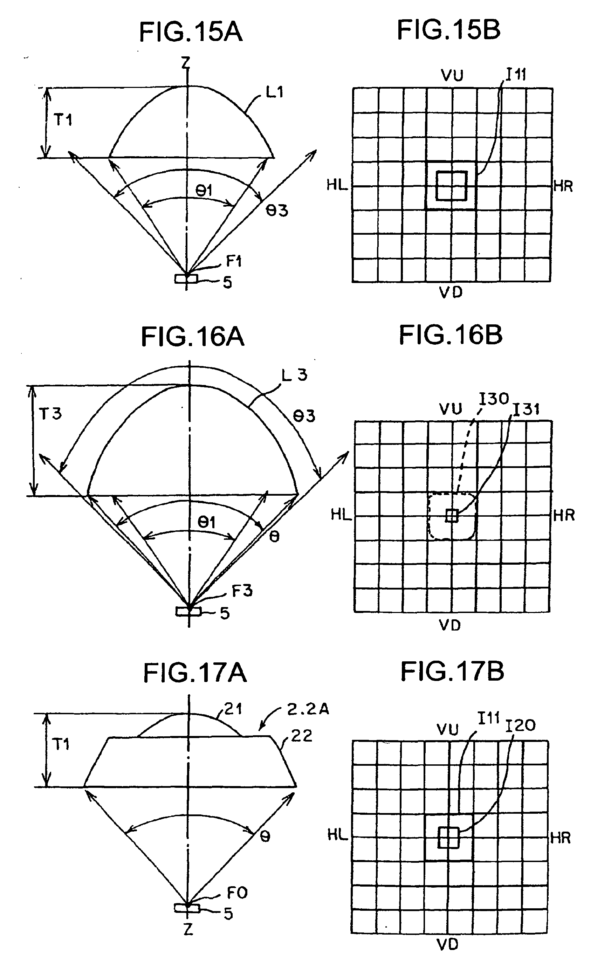

Fig. 15A and Fig. 15B are explanatory drawings of a light incidence efficiency of an aspherical lens being a mere convex lens;
Fig. 16A and Fig. 16B are explanatory drawings of a light incidence efficiency and an image blur of an aspherical lens larger in the effective diameter than the aspherical lens being a mere convex lens shown in Fig. 15A and Fig. 15B;
Fig. 17A and Fig. 17B are explanatory drawings of a light incidence efficiency and an image blur prevention of a lens according to a first embodiment;

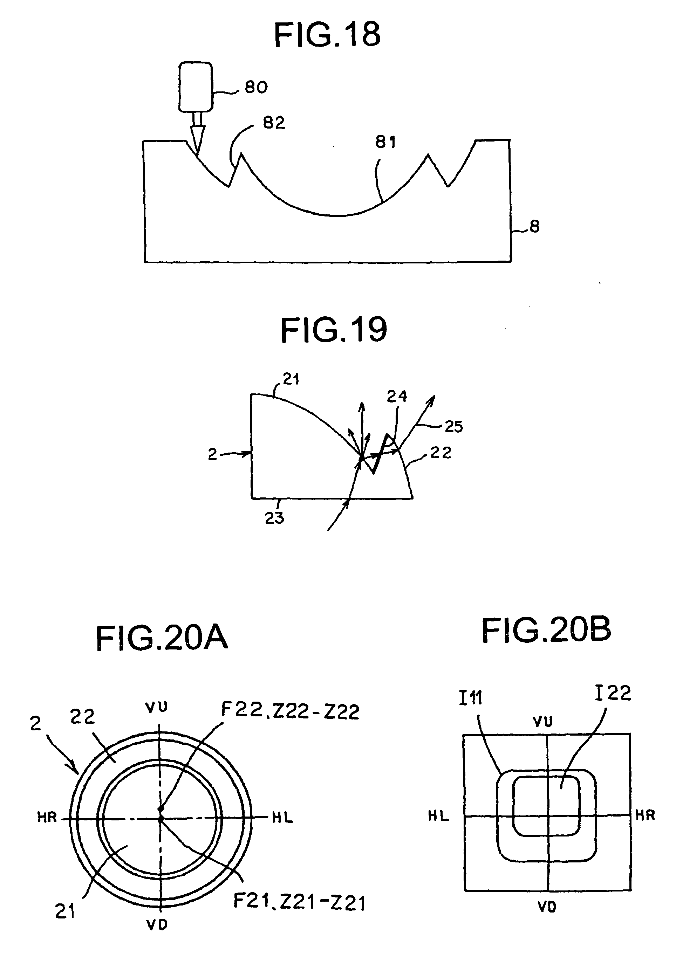

Fig. 18 is an explanatory drawing of a metal mold of a lens, likewise;
Fig. 19 is an explanatory drawing of a modification of a lens, likewise;
Fig. 20A and Fig. 20B are explanatory drawings of a modification of a lens, likewise;

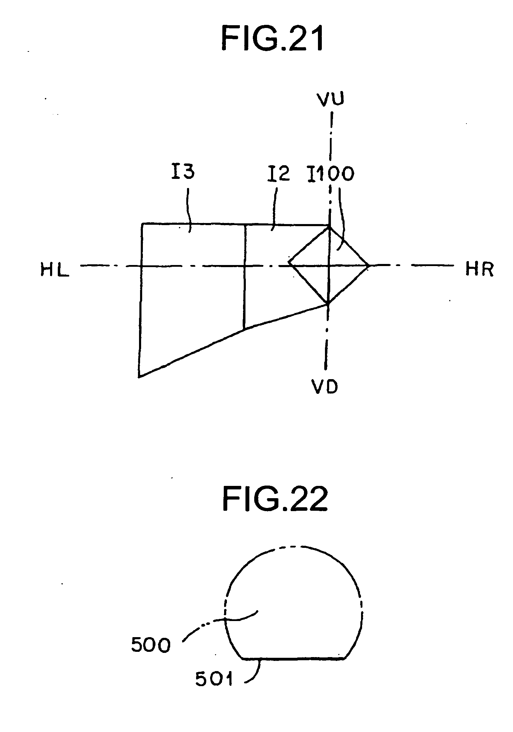

Fig. 21 is explanatory drawing of a first modification of a vehicle headlamp system according to the present invention;
Fig. 22 is explanatory drawing of a second modification of a vehicle headlamp system according to the present invention;

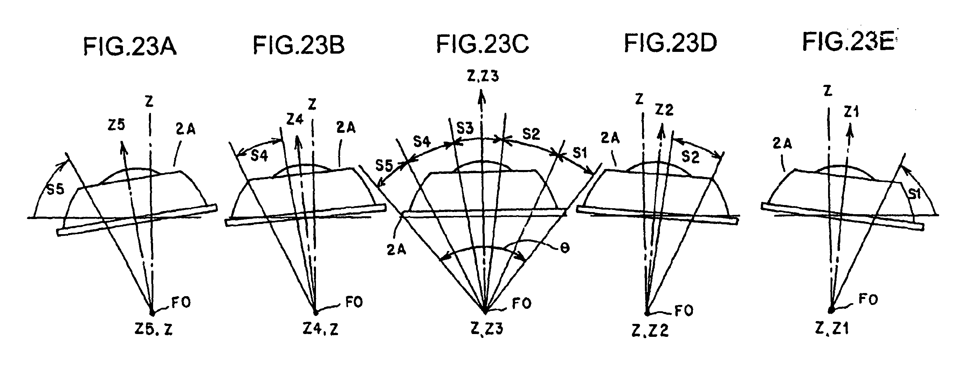

Fig. 23A to Fig. 23E are explanatory drawings of lens configurations according to a first modification;

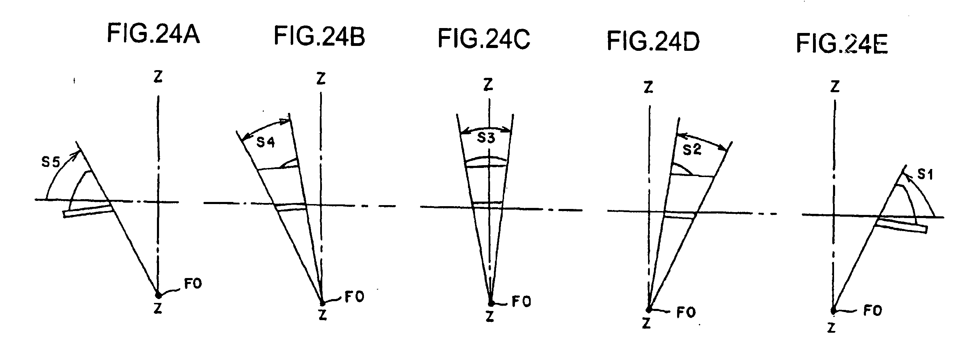

Fig. 24A to Fig. 24E are explanatory drawings of the lens configurations according to the first modification, likewise;

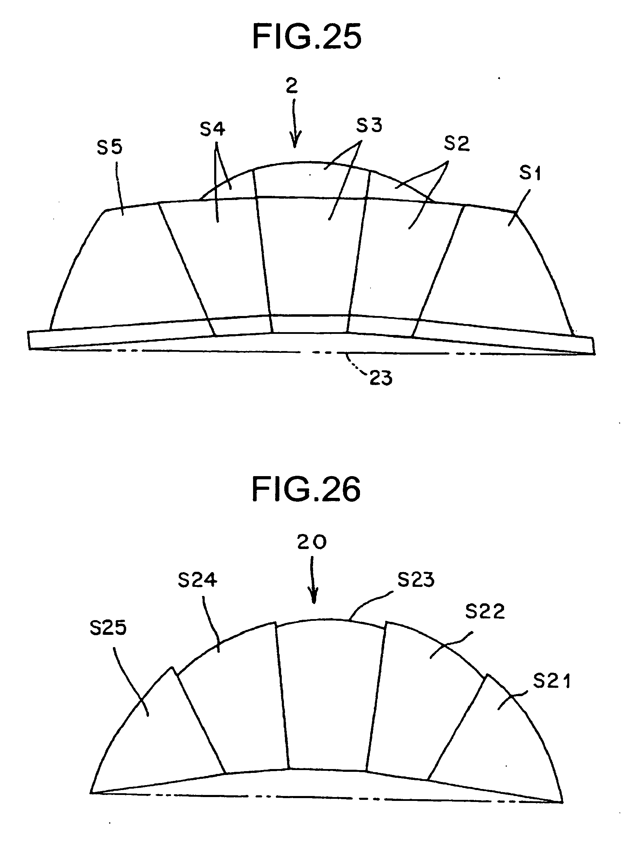

Fig. 25 is a plan view of a lens according to the first modification, likewise;
Fig. 26 is a plan view of a lens according to the first modification in a case of a normal convex lens composed of a convex-shaped aspherical lens with a single effective diameter, likewise;

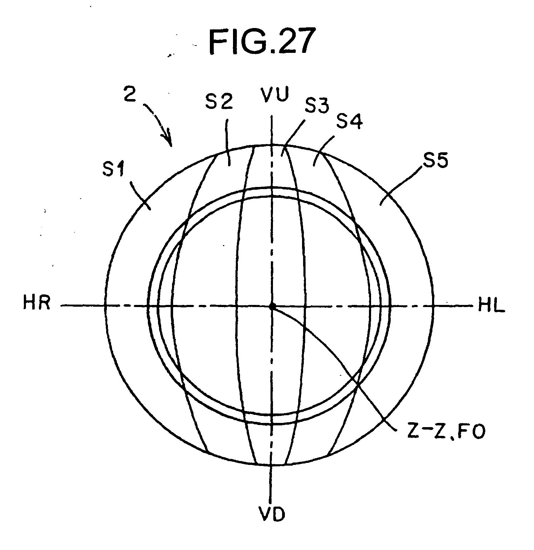

Fig. 27 is a front view of a lens according to the first modification, likewise;

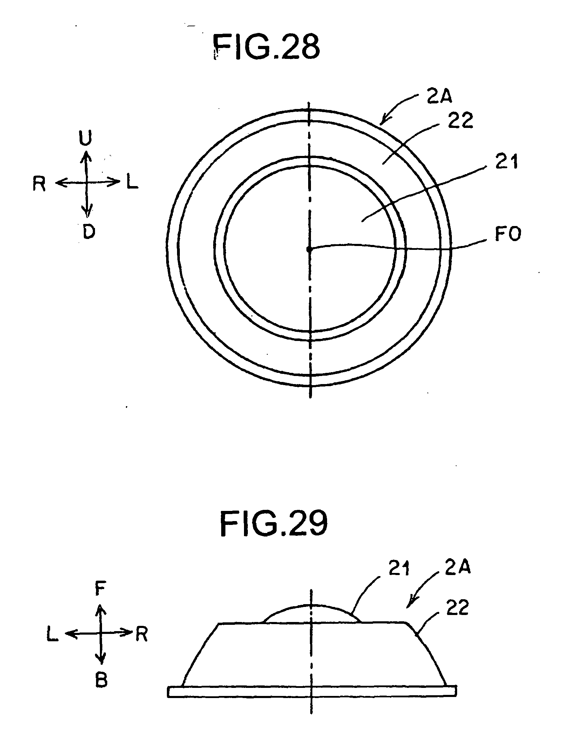

Fig. 28 is a front view of a lens according to the second modification;
Fig. 29 is a plan view of the lens according to the second modification, likewise;

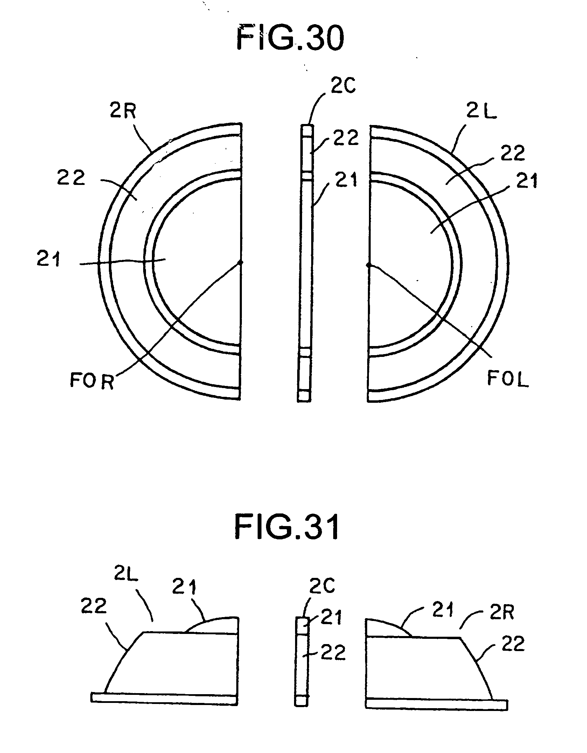

Fig. 30 is a front view of a basic lens divided into two equal parts as a lens according to the second modification and a joint lens, likewise;
Fig. 31 is a plan view of the basic lens divided into two equal parts as a lens according to the second modification and a joint lens, likewise;

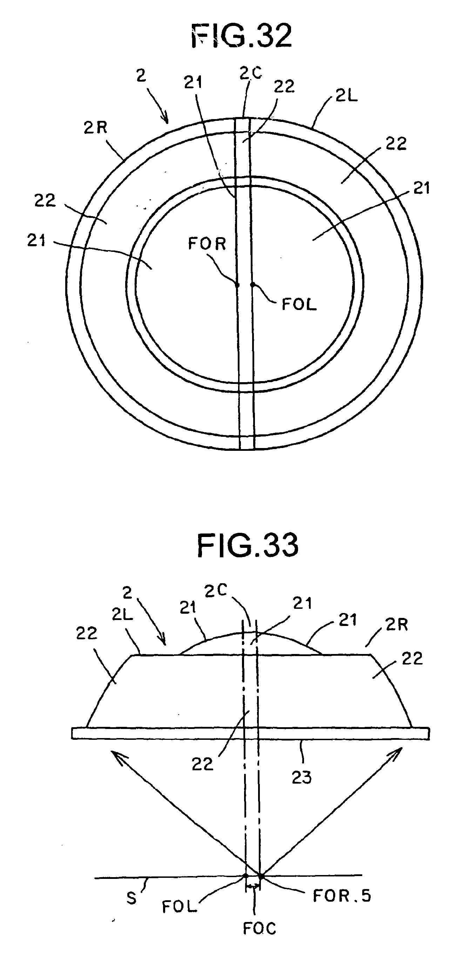

Fig. 32 is a front view of a basic lens divided into two equal parts as a lens according to the second modification, joined by a joint lens, likewise;
Fig. 33 is a plan view of the basic lens divided into two equal parts as a lens according to the second modification, joined by a joint lens, likewise;

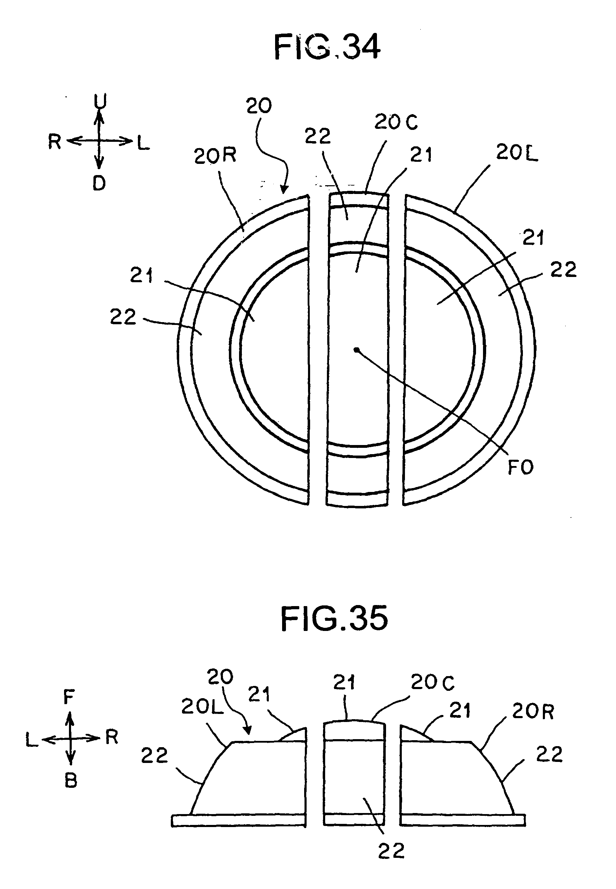

Fig. 34 is a front view of a lens according to a third modification;
Fig. 35 is a front view of the lens according to the third modification;

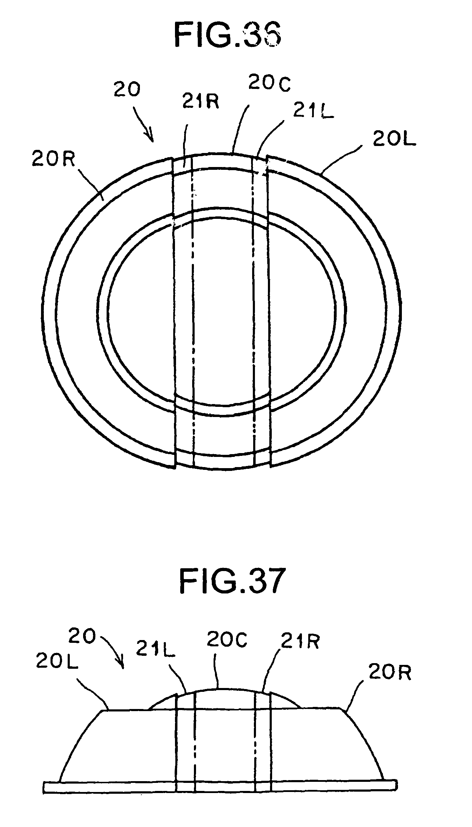

Fig. 36 is a front view of a basic lens divided into three equal parts as a lens according to the third modification, joined by joint lenses, likewise;
Fig. 37 is a plan view of the basic lens divided into three equal parts as a lens according to the third modification, joined by joint lenses, likewise;

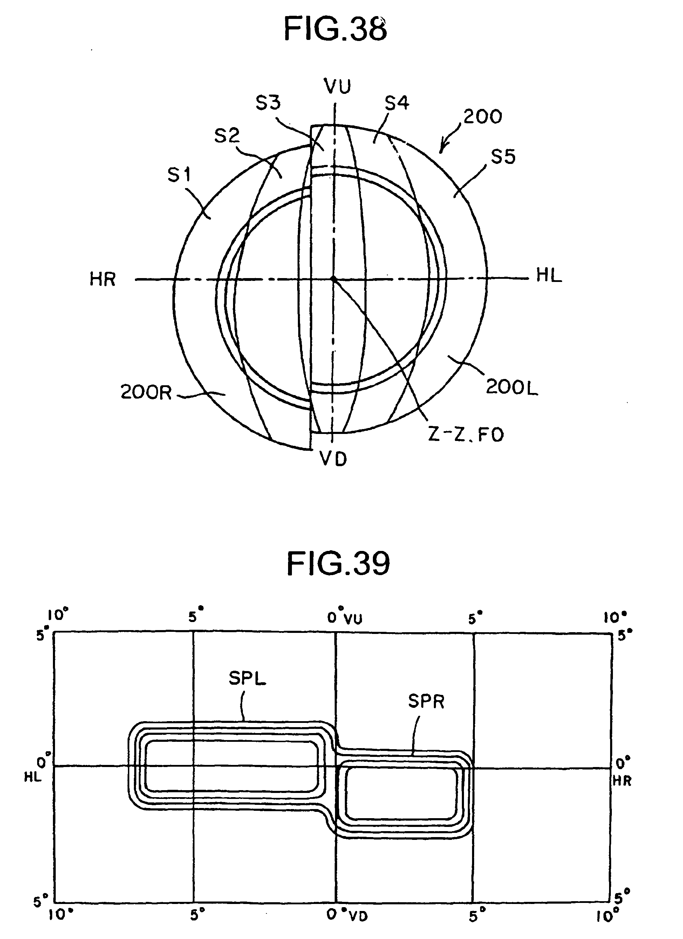

Fig. 38 is a front view of a lens according to a fourth modification;
Fig. 39 is an explanatory graph of a light distribution pattern obtained by the lens according to the fourth modification, likewise;

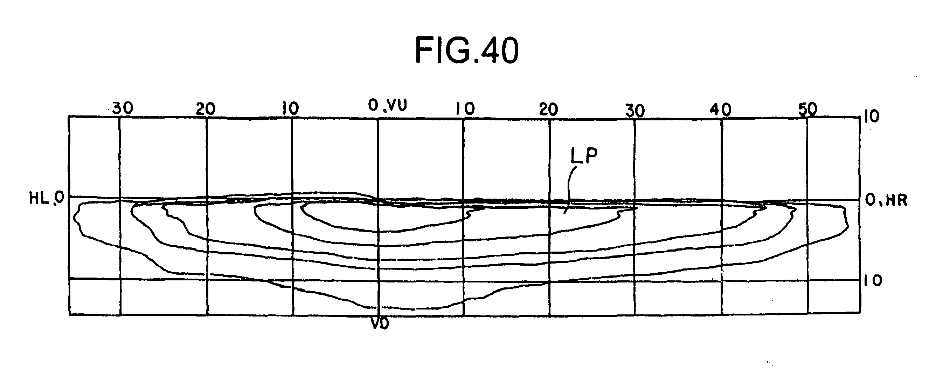

Fig. 40 is an explanatory graph of a passing light distribution pattern obtained by a headlamp unit, likewise;

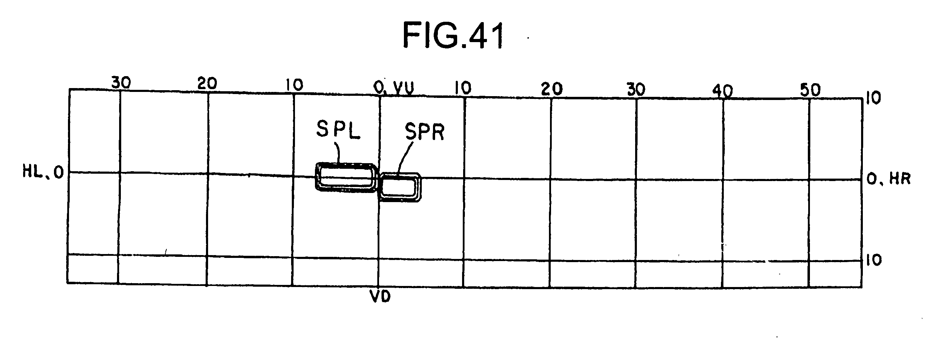

Fig. 41 is an explanatory graph of a spot-type light distribution pattern obtained by a spot lamp unit, likewise; and

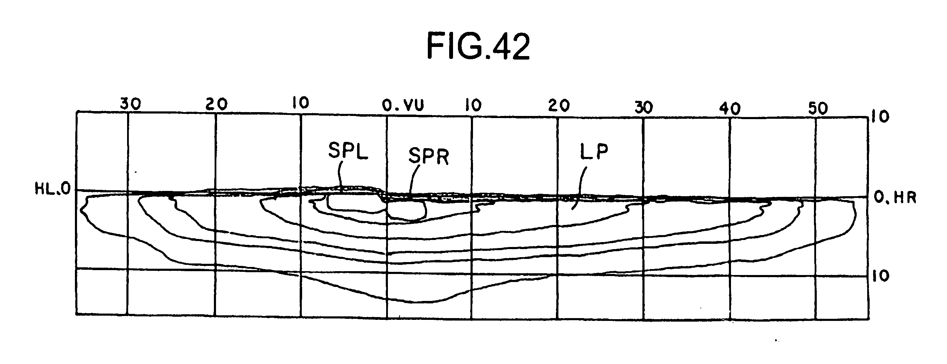

Fig. 42 is an explanatory graph of an ideal passing light distribution pattern by merging the passing light distribution pattern obtained by a headlamp unit of Fig. 40 and the passing light distribution pattern obtained by a spot lamp unit of Fig. 41, shown on a screen.

### DETAILED DESCRIPTION OF THE PREFERRED EMBODIMENTS

Exemplary embodiments of the present invention will be explained in detail, referring to the accompanying drawings. It is to be noted, however, that the present invention is not limited to the embodiments. The following description of the vehicle headlamp system is based on the assumption that the vehicle (automobile) is to drive on the left side. The structure and light distribution pattern of the vehicle headlamp system for right-side traffic is generally mirror-symmetric. Fig. 12 to Fig. 14, Fig. 39, and Fig. 40 to Fig. 42 are explanatory graphs of iso-intensity curves that show light distribution patterns on a screen obtained by a computer simulation process in a simplified manner, and the innermost iso-intensity curve represents a highest-intensity zone, and the other curves represent intensity zones where the light intensity declines as it goes outward. For example, the innermost iso-intensity curve in Fig. 39 delineates a zone of 10000 (candela), and the outer curves respectively delineate zones of 5000 (candela), 2000 (candela), and 300 (candela). In addition, the innermost iso-intensity curves in Fig. 12 and Fig. 40 delineate zones of 10000 (candela), and the outer curves respectively delineate zones of 5000 (candela), 2000 (candela), 1000 (candela), and 300 (candela). Furthermore, the innermost iso-intensity curves in Fig. 13 and Fig. 41 delineate zones of 10000 (candela), and the outer curves respectively delineate zones of 2000 (candela) and 300 (candela). Still furthermore, the innermost iso-intensity curves in Fig. 14 and Fig. 42 delineate zones of 20000 (candela), and the outer curves respectively delineate zones of 10000 (candela), 5000 (candela), 2000 (candela), 1000 (candela), and 300 (candela).

In the present specification and the drawings, a reference symbol "F" denotes a forward driving direction of the vehicle, from the viewpoint of the driver. A reference symbol "B" denotes an opposite direction to the forward driving direction of the vehicle, which is the rear side from the viewpoint of the driver. A reference symbol "U" denotes an upper side; a reference symbol "D" denotes a lower side; a reference symbol "L" denotes a left side of the vehicle with respect to the forward direction F; and a reference symbol "R" denotes a right side with respect to the forward direction F, all from the viewpoint of the driver.

A reference symbol "HL-HR" denotes a horizontal line in a left and right direction (left and right horizontal direction), or a left and right horizontal line on a screen placed 25 meters ahead, onto which the light distribution pattern is projected. A reference symbol "VU-VD" denotes a vertical line in an up and down direction (up and down vertical direction), or an up and down vertical line on a screen placed 25 meters ahead, onto which the light distribution pattern is projected. A reference symbol "HF-HB" denotes a horizontal line in a front and back direction (front and back horizontal direction). The terms "left side," "right side," "upper side," "lower side," "upper," and "lower" used in the claims are respectively equivalent to "left side," "right side," "upper side," "lower side," "upper," and "lower" used herein and in the drawings.

Fig. 1 to 4, 8, 10 and 12 to 20B depict an embodiment of a vehicle headlamp system according to the present invention. In the drawings, a reference symbol "LS" denotes a vehicle headlamp system of the embodiment. The vehicle headlamp system LS is to be mounted on both the left side front and right side front of a vehicle, respectively. The following description covers the vehicle headlamp unit LS to be mounted on the right side front. The vehicle headlamp unit LS to be mounted on the left side front has generally the same structure as that of the right side headlamp unit LS.

The vehicle headlamp system LS includes, as shown in Fig. 1, a headlamp unit L0 serving as a headlamp and a spot lamp unit SL serving as a vehicle lighting device. The headlamp unit L0 and the spot lamp unit SL are respectively accommodated in a light chamber 12 partitioned by a lamp housing 11 and a lamp lens (unillustrated, for example, a transparent outer lens).

The headlamp unit L0 outwardly emits a passing light distribution pattern LP as a basic light distribution pattern. The passing light distribution pattern LP includes, as shown in Fig. 12, an upper horizontal cutoff line CL1 located slightly above the left and right horizontal line HL-HR, an oblique cutoff line CL2, a lower horizontal cutoff line CL3 located slightly below the left and right horizontal line HL-HR, and an elbow point EP that is an intersection of the up and down vertical line VU-VD and the lower horizontal cutoff line CL3. In the passing light distribution pattern LP, an upper left region along the oblique cutoff line CL2 from the elbow point EP serves to secure a long-distance visibility.

The headlamp unit L0 includes, as shown in Fig. 1, an upper headlamp unit group LOU and a lower headlamp unit group LOD located above and below the spot lamp unit SL, respectively. The upper headlamp unit group LOU includes four headlamp units each constituted of a semiconductor light source such as an LED and primarily serves to diffuse a lower region of the passing light distribution pattern LP. On the other hand, the lower headlamp unit group LOD includes three headlamp units, also constituted of a semiconductor light source such as an LED, and primarily serves to emit the cutoff lines CL1, CL2, and CL3 of an upper region of the passing light distribution pattern LP.

The spot lamp unit SL outwardly emits, as shown in Fig. 14, a spot-type light distribution pattern SP at a predetermined position with respect to the passing light distribution pattern LP. The spot-type light distribution pattern SP is, as shown in Fig. 13, a light distribution pattern extended in a left and right direction and is a light distribution pattern that is slender to the left and right with an up and down width of approximately 2 degrees and a left and right width of approximately 12 degrees. Moreover, the upper side of the spot-type light distribution pattern is aligned with the upper horizontal cutoff line CL1 of the passing light distribution pattern LP and does not surpass upward the upper horizontal cutoff line CL1.

The spot lamp unit SL includes, as shown in Fig. 1 to Fig. 6B, a semiconductor light source 1, a lens 2, and a holder 3. The semiconductor light source 1 can be a self-emission semiconductor light source (an LED in this embodiment) such as an LED or an EL (organic EL). The semiconductor light source 1 includes a substrate 4, light emitters 51, 52, and 53 (unillustrated in Fig. 1 to Fig. 3) constituted of a plurality of, in this example, three light source chips (semiconductor chips) fixed on a surface of the substrate 4, a light transmitter 6 covering the three light emitters 51, 52, and 53, and a heat dissipator 7 fixed to the opposite surface of the substrate 4. The three light emitters 51, 52, and 53 are basically of minute squares, i.e. rectangular shapes each having four straight sides (in this example, a square shape), approximately 1mm on a side.

Lights from the three light emitters 51, 52, and 53 penetrate through the lens 2 and are emitted as three images I1, I2, and I3 in front of the vehicle. The three images I1, I2, and I3 form the spot-type light distribution pattern SP. Then, as shown in Fig. 8 and Fig. 10, the three light emitters 51, 52, and 53 are disposed in positions or postures such that the upper straight sides of the three images I1, I2, and I3 are aligned with the upper horizontal cutoff line CL1 of the passing light distribution pattern LP (equivalent to left and right horizontal line HL-HR in Fig. 10) and the lower straight sides are aligned in a road alignment (line shape with a reference symbol "WL" in Fig. 10).

Hereinafter, the disposition of the three light emitters 51, 52, and 53 will be explained with reference to Fig. 4, Fig. 6A, and Fig. 6B. First, in the three-dimensional coordinates of Fig. 4, Fig. 6A, and Fig. 6B (Fig. 4 to Fig. 7B), the origin "O" conforms to a focal point F0 of the lens 2. In addition, the x-axis "X" conforms to a left and right horizontal direction, in which the plus "+" conforms to a right side, and the minus "-" conforms to a left side. Furthermore, the y-axis "Y" conforms to an up and down vertical direction, in which the plus "+" conforms to an upper side, and the minus "-" conforms to a lower side. Still furthermore, the z-axis "Z" conforms to an optical axis Z-Z of the lens 2, in which the plus "+" conforms to a front side, and the minus "-" conforms a rear side. The coordinate is shown in units of millimeters.

Three-dimensional coordinates (X, Y, Z) of a center 51C of the first light emitter 51 are (0.00, 0.00, 0.00). Three-dimensional coordinates (X, Y, Z) of a center 52C of the second light emitter 52 are (1.50, 0.10, 0.10). Three-dimensional coordinates (X, Y, Z) of a center 53C of the third light emitter 53 are (3.00, 0.20, 0.20). In addition, in terms of postures of the first emitter 51 and the second emitter 52, both upper and lower sides are almost parallel to the x-axis and both left and right sides are almost parallel to the y-axis. On the other hand, the third light emitter 53 is in such a posture that it is centered on the center 53C and is rotated around a rotation axis almost parallel to the z-axis. Furthermore, a plate thickness of the three light emitters 51, 52, and 53 is almost parallel with the z-axis. Still furthermore, the three light emitters 51, 52, and 53 are offset by at least an amount more than the size of the light emitters 51, 52, and 53 so that the respective light emitters 51, 52, and 53 do not interfere with each other.

The lens 2 is, as shown in Fig. 3, an aspherical lens (refractive lens, projection lens), in which a plane of incidence (plane into which a light from a light emitter 5 is made incident) forms an aspherical plane and a plane of emergence (plane from which a light from the light emitter 5 is emitted) forms an aspherical convex surface. In addition, the lens 2 is integrally composed of convex-shaped first and second aspherical lens units 21 and 22 having different effective diameters L1 and L2. Namely, the first aspherical lens unit 21 having the smaller effective diameter L1 is enclosed by the second aspherical lens unit 22 with the greater effective diameter L2. Furthermore, for the lens 2, a focal point of the first aspherical lens unit 21 and a focal point of the second aspherical lens unit 22 shares an identical focal point F0 on a plane vertical to the optical axis Z-Z. Still furthermore, for the lens 2, a height H1 of the first aspherical lens portion 21 is equivalent to or higher than a height H2 of the second aspherical lens unit 22.

The lens 2 emits, as shown in Fig. 8 and Fig. 10, lights from the three light emitters 51, 52, and 53 as the spot-type light distribution pattern SP being the three images I1, I2, and I3. Namely, the image I1 emitted from the lens 2, of the first emitter 51 positioned at the focal point F0 of the lens 2 or near the focal point F0 is located on the up and down vertical line VU-VD (see Fig. 8) or near the vertical line VU-VD (see Fig. 10). The image I2 emitted from the lens 2, of the second light emitter 52 positioned on the right side beyond the first light emitter 51 from the focal point F0 of the lens 2 is connected to the left side of the emitted light I1. The image I3 emitted from the lens 2, of the third light emitter 53 positioned on the right side beyond the second light emitter 52 from the focal point F0 is connected to the left side of the emitted image I2.

The holder 3 holds the semiconductor light source 1 and lens 2 in a relative positional relationship where the first light emitter 51 of the semiconductor light source 1 is positioned at the focal point F0 of the lens 2 or near the same. As a result, the images emitted from the lens 2 are distributed as a condensed image. As such, the spot lamp unit SL is composed of a direct-emission optical system that directly distributes lights from the light emitters 51, 52, and 53 of the semiconductor light source 1 by the lens 2.

The vehicle headlamp system LS according to the embodiment has such a structure as in the above, and the following passages cover the advantageous effect thereof.

When the spot lamp unit SL is turned on, lights from the light emitters 51, 52, and 53 of the semiconductor light source 1 of the spot lamp unit SL are emitted as a spot-type light distribution pattern SP being three images I1, I2, and I3. At this time, because the three light emitters 51, 52, and 53 have been disposed in the predetermined positions and postures, upper sides of the three images I1, I2, and I3 of the three light emitters 51, 52, and 53 emitted from the lens 2 are aligned with the upper horizontal cutoff line CL1 of the passing light distribution pattern LP. Such a configuration can prevent a part of the images I1, I2, and I3 from, as shown in Fig. 10, surpassing the upper horizontal cutoff line CL1 (corresponds to the left and right horizontal line HL-HR in Fig. 10) of the passing light distribution pattern LP, and consequently, the vehicle headlamp system LS according to the embodiment can securely prevent the emergence of glare.

In addition, in the vehicle headlamp system according to the embodiment, because the three light emitters 51, 52, and 53 have been disposed in the predetermined positions and postures, lower sides of three images of the three light emitters 51, 52, and 53 emitted from the lens 2 are aligned in a road alignment WL. Consequently, as shown in Fig. 10, because lower sides of the three images I1, I2, and I3 are aligned with a left road shoulder (road alignment WL in Fig. 10), the vehicle headlamp system LS according to the embodiment can secure long-distance visibility without lighting a nearer side of a driving lane (between the road alignment WL and a centerline WC in Fig. 10).

As such, because the three images I1, I2, and I3 can be obtained, a spot-type light distribution pattern SP suitable for the vehicle headlamp system can be simply and securely obtained. Namely, by adjusting the three images shown in Fig. 8 in the up, down, left, and right directions, a spot-type light distribution pattern shown in Fig. 10 and Fig. 13 can be simply and securely obtained. The spot-type light distribution pattern SP shown in Fig. 10 and Fig. 13 is merged with a passing light distribution pattern LP shown in Fig. 12, whereby an ideal light distribution pattern (light distribution pattern in which the passing light distribution pattern LP and spot-type light distribution pattern SP are merged) can be obtained. In the ideal light distribution pattern, the spot-type light distribution pattern SP is arranged at a predetermined position of the passing light distribution pattern LP, namely, a position lower than the upper horizontal cutoff line CL1 and on the right side from the elbow point EP and oblique cutoff line CL2. Because this position is a part that serves long-distance visibility, the vehicle headlamp system LS according to the embodiment can reliably secure a long-distance visibility without casting a glare toward drivers and fellow passengers on oncoming vehicles or preceding vehicles, pedestrians and the like, thus contributing to traffic safety.

Here, the vehicle headlamp system LS according to the embodiment and the conventional vehicle headlamp system will be examined in comparison with each other. The conventional vehicle headlamp system is provided by disposing three light emitting chips in the horizontal direction. Namely, as shown in Fig. 5, Fig. 7A, and Fig. 7B, three-dimensional coordinates (X, Y, Z) of a center 510C of the first light emitter 510 are (0.00, 0.00, 0.00). Three-dimensional coordinates (X, Y, Z) of a center 520C of the second light emitter 520 are (1.50, 0.00, 0.00). Three-dimensional coordinates (X, Y, Z) of a center 530C of the third light emitter 530 are (3.00, 0.00, 0.00). In addition, in terms of postures of the first emitter 510, the second emitters 520, and the third light emitter 530, both upper and lower sides are almost parallel to the x-axis and both left and right sides are almost parallel to the y-axis. Furthermore, a plate thickness of the three light emitters 51, 52, and 53 is almost parallel with the z-axis. Still furthermore, the three light emitters 510, 520, and 530 are offset by at least an amount more than the size of the light emitters 510, 520, and 530 so that the respective light emitters 510, 520, and 530 do not interfere with each other.

In the conventional vehicle headlamp system, three images I110, I220, and I330 of the light emitters 510, 520, and 530 emitted from a lens 26 are as shown in Fig. 9 and Fig. 11. Namely, the image I10 emitted from the light emitter 510 remains without losing shape in contour, while the images I20 and I30 emitted from the light emitters 520 and 530 offset to the right with respect to the light emitter 510 lose shape in contours and connected to the left side of the I10 emitted from the light emitter 510. Accordingly, in the conventional vehicle headlamp system, among the images of the light emitting chips 510, 520, and 530 emitted from the projection lens 26, the contours of some images can lose shape so that a part of the images surpasses a cutoff line of a basic light distribution pattern. In this case, a glare may occur.

Therefore, in the vehicle headlamp system LS according to the invention, the second light emitter 52 is offset in the right direction (+X direction) as well as in the upper direction (+Y direction) so that the upper side of the image I2 from the second light emitter 52 is aligned with the upper side of the image I1 emitted from the first light emitter 51. In addition, the third light emitter 53 is offset in the right direction (+X direction) as well as in the upper direction (+Y direction) so that the upper side of the image I3 emitted from the third light emitter 53 is aligned with the upper side of the image I1 emitted from the first light emitter 51 and the upper side of the image I2 emitted from the second light emitter 52, and furthermore, the third light emitter 53 is centered on the center 53C of the third light emitter 53 and is rotated around the rotation axis almost parallel to the z-axis. Thereby, in the vehicle headlamp system LS according to the embodiment, the upper sides of the three images I1, I2, and I3 of the three light emitters 51, 52, and 53 emitted from the lens 2 can be aligned with the upper horizontal cutoff line CL1 (corresponds to the left and right horizontal line HL-HR in Fig. 10) of the passing light distribution pattern LP. Moreover, in the vehicle headlamp system LS according to the embodiment, as shown in Fig. 10, the lower sides of the three images I1, I2, and I3 of the three light emitters 51 emitted from the lens 2 can be aligned with the road alignment WL. Here, because the second light emitter 52 and the third light emitter 53 have a deviation in the +X direction and +Y direction from the focal point F0 of the lens 2, this may cause a slight loss in shape in the counter of the emitted images I2 and I3. However, in the embodiment, the second light emitter 52 is offset slightly to the front (+Z direction) with respect to the first light emitter 51, and the third light emitter 53 is offset slightly to the front (+Z direction) with respect to the first light emitter 51 and the second light emitter 52. Consequently, because the slight loss in shape in the counter of the I2 and I3 is absorbed by the offset in the +Z direction, a satisfactory light distribution pattern can be obtained.

In addition, because the vehicle headlamp system LS according to the embodiment allows obtaining a spot-type light distribution pattern SP extended in the left and right direction by the single spot lamp unit SL by using the three light emitters 51, 52, and 53, the number of components is reduced so that the manufacturing cost can be lowered for that much. Moreover, with the single spot lamp unit SL, storage space can be considerably reduced, and the number of components of a swivel mechanism or a sliding mechanism accompanied with the spot lamp unit SL can be considerably reduced, whereby the degree of freedom of design is increased.

In particular, the vehicle headlamp system LS according to the embodiment uses the lens 2 integrally composed of the convex-shaped first and second aspherical lens units 21 and 22 having different effective diameters L1 and L2, namely, the lens 2 formed by enclosing the first aspherical lens unit 21 with the second aspherical lens unit 22 having the greater effective diameter L2, namely, a compound lens. Therefore, because the vehicle headlamp system LS according to the embodiment can allow a light from the light emitter 5 of the semiconductor light source 1 to be efficiently made incident by use of the lens 2, a high-intensity (high-density) image (light distribution pattern) can be obtained, and moreover, a sharp outline can be obtained around the image by preventing an image blur owing to a spherical aberration and a chromatic aberration.

The advantageous effect will be explained with reference to Fig. 15A to Fig. 17B. First, in the aspherical lens L1 being a mere convex lens shown in Fig. 15A, because a maximum incidence angle θ1 that projects an appropriate-sized image I11 (see Fig. 15B) at an appropriate thickness T1 is smaller than a radiation angle 03 of a light from the single light emitter 5 of the semiconductor light source 1 (θ1<<θ3), light incidence efficiency of the aspherical lens L1 is low. A reference symbol F1 in Fig. 15A is a focal point of the aspherical lens L1, and the light emitter 5 of the semiconductor light source 1 is positioned at the focal point F1.

Here, in order to improve the light incidence efficiency, an aspherical lens L3 (see Fig. 16A) whose distance from a focal point F3 to a plane of incidence is the same as that of the aspherical lens L1 and whose effective diameter is greater than the aspherical lens L1 is considered. Then, a maximum incident angle 8 of the aspherical lens L3 becomes almost the same as the radiation angle θ3 of a light from the light emitter 5 of the semiconductor light source 1, whereby a high light incidence efficiency can be obtained. However, a thickness T3 of the aspherical lens L3 increases greater than the thickness T1 of the aspherical lens L1, is therefore unrealistic in molding, and leads to an image I31 (see Fig. 16B) smaller in size than the appropriate-sized image I11 that achieves an intended light distribution pattern. Moreover, a spherical aberration of the aspherical lens L3 is generated to cause an image blur I30 (see dotted line in Fig. 16B). Therefore, there is a problem in distributing a side of the image along a cutoff line of the basic distribution pattern. Here, the reference symbol F3 in Fig. 16A denotes a focal point of the aspherical lens L3, and the light emitter 5 of the semiconductor light source 1 is located at the focal point F3.

Therefore, in the embodiment, the lens 2 (basic lens 2A) integrated by integrating the aspherical lens L3 (second aspherical lens unit 22) so as to enclose the aspherical lens L1 (first aspherical lens unit 21) is used. Thereby, as shown in Fig. 17A, despite maintaining the appropriate-sized image I11 (see Fig. 17B) at the appropriate thickness T1, the maximum incidence angle θ of the lens 2 can be made almost equal to the maximum incidence angle θ of the aspherical lens L3, in other words, light incidence efficiency can be improved. On the other hand, an image I20 (see Fig. 17B) of a size by an increment (equivalent to θ-θ1) with a spherical aberration can be kept within the appropriate-sized image I11 of the aspherical lens L1 (first aspherical lens unit 21). As a result, as shown in Fig. 17B, while the outline of the image I11 remains sharp, a highly-efficient light distribution such that the insides of the images I11 and 120 reach a high intensity (high density) can be obtained. Thereby, as mentioned above, high-intensity (high-density) spot-type light distribution patterns SP, SPL, and SPR extended in the left and right direction can be obtained at a high efficiency.

In addition, in the vehicle headlamp system LS according to the embodiment, a plane of incidence 23 (see Fig. 19 and Fig. 25) of the lens 2 constituted of a composite lens is shared by an identical aspherical plane. Namely, a plane of incidence of the first aspherical lens unit 21 and a plane of incidence of the second aspherical lens unit 22 are shared by an identical aspherical plane. Accordingly, in the vehicle headlamp system LS according to the embodiment, most of the light made incident into the plane of incidence 23 of the lens 2 is distributed from aspherical convex surfaces, which are planes of emergence of the first aspherical lens unit 21 and second aspherical lens unit 22, as intended. In other words, the light made incident into the lens 2 is distributed with little light loss.

Furthermore, the vehicle headlamp system LS according to the embodiment uses the lens 2 where the height H1 of the first aspherical lens unit 21 is equivalent to or higher than the height H2 of the second aspherical lens unit 22, namely, the lens 2 where a highest point of the convex surface (convex portion) of the second aspherical lens unit 22 is lower than a highest point of the convex surface (convex portion) of the first aspherical lens unit 21. Therefore, for the vehicle headlamp system LS according to the embodiment, as shown in Fig. 18, in a metal mold 8 of the lens 2, a deepest point of a concave portion 82 to mold the second aspherical lens unit 22 is shallower than a deepest point of a concave portion 81 to mold the first aspherical lens unit 21. As a result, in the vehicle headlamp system LS according to the embodiment, when processing the metal mold 8 of the lens 2, a shelter for an NC machining cutter chuck 80 can be secured, which allows a stable high-precision processing. Namely, when the deepest point of the concave portion 82 to mold the second aspherical lens unit 22 is made deeper than the deepest point of the concave portion 81 to mold the first aspherical lens unit 21, the angle of a valley portion of the concave portion 82 to mold the second aspherical lens unit 22 is reduced to make side walls of the valley portion almost vertical, so that the shelter for the NC machining cutter chuck 80 cannot be secured.

Here, lights that are emitted from the plane of emergence being the convex surface of the first aspherical lens unit 21 and the plane of emergence being the convex surface of the second aspherical lens unit 22 involve a scattered light at the planes of emergence. In particular, a scattered light that is generated, of the plane of emergence being the convex surface of the first aspherical lens unit 21, near a junction with the second aspherical lens unit 22 can be again made incident from a boundary wall surface (a plane between the convex surface of the first aspherical lens unit 21 and convex surface of the second aspherical lens unit 22, logically, a plane from which a positive refracted light made incident from the plane of incidence 23 is not emitted outward) 24 of the second aspherical lens unit 22 to become a stray light 25 when emitted from the plane of emergence being the convex surface of the second aspherical lens unit 22. Therefore, in the vehicle headlamp system LS according to the embodiment, the problem of a stray light can be solved by applying a surface treatment (see the thick solid line in Fig. 19) to lower light transmittance, for example, a grain finish, frosting, or painting to the boundary wall surface 24 of the second aspherical lens unit 22 of the lens 22, and moreover, a new external appearance can be obtained.

In addition, for the vehicle headlamp system LS according to the embodiment, as shown in Fig. 20A, in the lens 2, while an axis Z22-Z22 that passes through a focal point F22 of the second aspherical lens unit 22 is offset upward in the vertical direction with respect to an axis Z21-Z21 that passes through a focal point F21 of the first aspherical lens unit 21, the first aspherical lens unit 21 is integrated with the second aspherical lens unit 22. Thereby, for the vehicle headlamp system LS according to the embodiment, as shown in Fig. 20B, an image I22 obtained by the second aspherical lens portion 22 can be offset upward in the vertical direction with respect to an image I21 obtained by the first aspherical lens unit 21. Namely, in the images I21 and I22 emitted from the lens 2, the high-density zone can be shifted upward in the vertical direction, i.e. to the cutoff line side of a basic light distribution pattern, therefore, long-distance visibility can further be improved.

Fig. 21 depicts a first modification of a vehicle headlamp system according to the present invention. In the first modification, an image I100 obtained by rotating the emitted image I1 of the light emitter 51 according to the embodiment by approximately 45 degrees is used. Namely, the first light emitter 51 according to the embodiment is centered on the center 51C and is rotated by approximately 45 degrees around a rotation axis almost parallel to the z-axis. Thereby, according to the first modification, emitted images I100, I2, and I3 as shown in Fig. 21, namely, emitted images I100, I2, and I3 in which an upper right oblique side of the image I100 is aligned with the oblique cutoff line CL2 of the passing light distribution pattern LP and upper sides of the images I2 and I3 are aligned with the upper horizontal cutoff line CL1 of the passing light distribution pattern LP are obtained.

Fig. 22 depicts a second modification of a vehicle headlamp system according to the present invention. In the second modification, the shape of the light emitter can be any shape as long as the shape of the light emitter 500 has at least one straight side 501. A straight side 501 of the light emitter 500 forms a straight side of an image emitted from a lens.

Hereinafter, modifications of the lens 2 will be explained. Fig. 23A to Fig. 27 depict a first modification of the lens 2. The lens 2 according to the first modification employs the lens 2 shown in the vertical cross-sectional view (sectional view in the up and down direction) of Fig. 3, namely, a lens with a single focal point F0 and a single optical axis Z-Z as a basic lens 2A. The basic lens 2A is rotated around the focal point F0 of the basic lens 2A or near the same so that the optical axis Z-Z of the basic lens 2A is distributed into a plurality of directions in which elongation of the shapes (images I1 (I100), I2, and I3) of the light emitters 51, 52, and 53 is intended. In this example, the optical axis Z-Z of the basic lens 2A is distributed into five axes in the left and right direction, namely, an optical axis Z1-Z1 of Fig. 23E, an optical axis Z2-Z2 of Fig. 23D, an optical axis Z3-Z3 of Fig. 23C, an optical axis Z4-Z4 of Fig. 23B, and an optical axis Z5-Z5 of Fig. 23A. The optical axis Z1-Z1 of Fig. 23E is distributed to the right with respect to the optical axis Z-Z of the basic lens 2A. The optical axis Z2-Z2 of Fig. 23D is distributed to the right with respect to the optical axis Z-Z of the basic lens 2A at an angle smaller than the angle of distribution of the optical axis Z1-Z1 of Fig. 23E. The optical axis Z3-Z3 of Fig. 23C is not distributed with respect to the optical axis Z-Z of the basic lens 2A but is coincident with the optical axis Z-Z of the basic lens 2A. The optical axis Z4-Z4 of Fig. 23B is distributed to the left with respect to the optical axis Z-Z of the basic lens 2A. The optical axis Z5-Z5 of Fig. 23A is distributed to the left with respect to the optical axis Z-Z of the basic lens 2A at an angle greater than the angle of distribution of the optical axis Z4-Z4 of Fig. 23B.

Next, as shown in Fig. 23C, a fan (circular arc) at a maximum incidence angle θ of a light from the light emitter 5 centered on the rotation center (focal point F0 of the basic lens 2A or near the same) that has been divided into a plurality of parts according to the number of distributed optical axes of the basic lens 2A is used as a template. In this example, the template is provided by dividing a fan (circular arc) at a maximum incidence angle θ of a light from the light emitter 5 centered on the rotation center into five at a distribution (equi-solid angle distribution) according to the five respective optical axes (Z1-Z2, Z2-Z2, Z3-Z3, Z4-Z4, and Z5-Z5). Based on the template divided into five, corresponding parts (sectors) S1, S2, S3, S4, and S5 are cut out from each of the five rotated basic lenses 2A. Namely, based on the first template (S1), the part (sector) S1 of the basic lens 2A of Fig. 23E is cut out as shown in Fig. 24E. In addition, based on the second template (S2), the part (sector) S2 of the basic lens 2A of Fig. 23D is cut out as shown in Fig. 24D. Furthermore, based on the third template (S3), the part (sector) S3 of the basic lens 2A of Fig. 23C is cut out as shown in Fig. 24C. Still furthermore, based on the fourth template (S4), the part (sector) S4 of the basic lens 2A of Fig. 23B is cut out as shown in Fig. 24B. Still furthermore, based on the fifth template (S5), the part (sector) S5 of the basic lens 2A of Fig. 23A is cut out as shown in Fig. 24A.

Then, by integrating the sectors S1, S2, S3, S4, and S5 cut out from each of the five basic lenses 2A, the lens 2 is formed. The lens 2 is, as shown in Fig. 25 and Fig. 27, constituted of a composite lens with multiple optical axes (Z1-Z1, Z2-Z2, Z3-Z3, Z4-Z4, and Z5-Z5) that shares a single focal point F0. The plane of incidence (a plane into which a light from the light emitter 5 is made incident; bottom surface) 23 of the lens 2 constituted of the composite lens shares, as shown by the alternate long and two short dashed line in Fig. 25, a plane of an identical aspherical surface.

In the first embodiment, the lens 2 integrally composed of the two convex-shaped first and second aspherical lens units 21 and 22 having different effective diameters L1 and L2 is used. However, in the present invention, as shown in Fig. 26, a lens 20 that is a normal convex lens constituted of a convex-shaped aspherical lens with a single effective diameter may be used. Namely, similarly, in a case of the lens 20 as well, first, a basic lens is rotated around a focal point of the basic lens or near the same so that an optical axis of the basic lens is distributed into a plurality of directions in which elongation of the shape of the light emitter 5 is intended. Next, while using a fan at a maximum incidence angle θ of a light from the light emitter 5 centered on the rotation center that has been divided into a plurality of parts according to the number of distributed optical axes of the basic lens as a template, corresponding parts S21, S22, S23, S24, and S25 are cut out from each of the rotated basic lenses. Then, by integrating the parts S21, S22, S23, S24, and S25 cut out from each of the basic lenses, the lens 20 constituted of a composite lens with multiple optical axes sharing a single focal point is obtained.

Fig. 28 to Fig. 33 depict a second modification of the lens 2. The lens 2 according to the second modification first employs the lens 2 shown in the vertical cross-sectional view (sectional view in the up and down direction) of Fig. 3 as the basic lens 2A. The basic lens 2A is divided into two, namely, divided into two equal parts (see Fig. 28 and Fig. 29) in a direction almost orthogonal to a direction in which elongation of the shapes (images I1 (I100), I2, and I3) of the light emitters 51, 52, and 53 is intended, i.e. the left and right direction, at the focal point F0 of the basic lens 2A and the zenith of the convex portion.

Next, the two divided basic lenses 2L and 2R are disposed with a gap in the left and right direction. Then, a cylindrical joint lens 2C in a shape almost identical to a cross sectional shape of the divided basic lenses 2L and 2R is provided between the two divided basic lenses 2L and 2R thus disposed (see Fig. 30 and Fig. 31). The cylindrical joint lens 2C is an aspherical cylindrical lens having a minute width (for example, 1 to 1.5mm).

The lens 2 is constituted of a lens where focal points FOL and FOR of the two divided basic lenses 2L and 2R have been connected to a focal line (focal point group) FOC of the cylindrical joint lens 2C by integrating the two divided basic lenses 2L and 2R with the cylindrical joint lens 2C (see Fig. 32 and Fig. 33). Namely, the lens 2 is constituted of a composite lens where three sectors have been integrated.

The focal points FOL and FOR of the two divided basic lenses 2L and 2R and the focal line (focal point group) FOC of the cylindrical joint lens 2C are present on an identical plane S almost vertical to the optical axis Z-Z and are also present on an identical straight line. In addition, the plane of incidence (a plane into which a light from the light emitter 5 is made incident; bottom surface) 23 of the lens 2 constituted of the composite lens shares an identical aspherical plane.

Fig. 34 to Fig. 37 depict a third modification of the lens 20. For the lens 20 according to the third modification, a basic lens 20A (basic lens almost the same as the basic lens 2A of the lens 2 according to the first modification and the second modification) is divided into three (unillustrated) of a center portion 20C and both end portions 20L and 20R having a focal point F0 of the basic lens 20A in a direction almost orthogonal to a direction in which elongation of the shapes (images I1 (I100), I2, and I3) of the light emitters 51, 52, and 53 is intended, i.e. the left and right direction.

Next, the three divided basic lenses 20L, 20C, and 20R are disposed with gaps in the left and right direction (see Fig. 34 and Fig. 35). For example, the lens left end portion 20L is disposed with a gap in the left direction with respect to the lens center portion 20C, and the lens right end portion 20R, with a gap in the right direction.

Then, joint lenses 21L and 21R are provided among the three divided basic lenses 20L, 20C, and 20R thus disposed, i.e. between the lens center portion 20C and lens left end portion 20L and between the lens center portion 20C and lens right end portion 20R (see Fig. 36 and Fig. 37). The joint lenses 21L and 21R are lenses in a shape extended from both left and right dividing surfaces of the lens center portion 20C along the basic lens 20A. The joint lenses 21L and 21R may be cylindrical lenses formed by sliding the left and right dividing surfaces of the lens center portion 20 to the left and right as they are.

As such, the lens 20 according to the third modification is constituted of a lens where the three divided basic lenses (lens center portion 20C, lens left end portion 20L, and lens right end portion 20R) have been integrated with the two joint lenses 21L and 21R.

Fig. 38 to Fig. 42 depict a fourth modification of the lens 200. For the lens 200 according to the fourth modification, a lens 200 almost the same as the lens 2 used in the first modification is used. Namely, the lens 200 according to the fourth embodiment is a lens where, as shown in Fig. 38, the left and right parts of the lens 2 used in the first modification have been alternately displaced in the vertical direction. Namely, a right part 200R (sectors S1 and S2) of the lens 200 is displaced to the lower side with respect to a left part 200L (sectors S3, S4, and S5) of the lens 200. The sector S3 belongs to the left part 200L for the most part, while a part belongs to the right part 200R. In addition, the sector 2 belongs to the right part 200R for the most part, while a part belongs to the left part 200L.

When the spot lamp unit SL is turned on by the lens 200 according to the fourth modification, lights from the light emitters 51, 52, and 53 of the semiconductor light source 1 of the spot lamp unit SL are emitted, as shown in Fig. 39, as spot-type light distribution patterns SPL and SPR from the lens 200. As the light distribution patterns, the light distribution pattern SPR corresponding to the right part 200R of the lens 200 and the light distribution pattern SPL corresponding to the left part 200L of the lens 200 are displaced up and down from each other.

Then, by adjusting the spot-type light distribution patterns SPL and SPR shown in Fig. 39 in the up, down, left, and right directions, spot-type light distribution patterns SPL and SPR shown in Fig. 41 where the left and right parts have been slightly displaced up and down from each other can be simply and securely obtained. The spot-type light distribution patterns SPL and SPR are merged with the passing light distribution pattern shown in Fig. 40, whereby an ideal light distribution pattern (light distribution pattern in which the passing light distribution pattern LP and spot-type light distribution patterns SPL and SPR are merged) shown in Fig. 42 can be obtained. In the ideal light distribution pattern, the spot-type light distribution patterns SPL and SPR are arranged at predetermined positions of the passing light distribution pattern LP, namely, the left part SPL is arranged at a position lower than the upper horizontal cutoff line CL1 and on the right side from the elbow point EP and oblique cutoff line CL2, and the right part SPR is arranged lower than the lower horizontal cutoff line CL3. Because this position is a part that serves a long-distance visibility, the vehicle headlamp system according to the embodiment can reliably secure long-distance visibility without casting a glare toward drivers and fellow passengers on oncoming vehicles or preceding vehicles, pedestrians and the like, thus contributing to traffic safety. Moreover, by slightly raising the spot-type light distribution patterns SPL and SPR to the upper side, a motorway light distribution pattern (unillustrated, a light distribution pattern that is high in possibility that a vehicle encounters a preceding vehicle or an oncoming vehicle and is appropriate for high-speed driving) can be obtained.

As in the lens 200 according to the fourth modification, the left and right parts of the lens 2 according to the second modification and the lens 20 according to the third modification may be alternately displaced in the vertical direction.

Also, in the embodiment, the headlamp unit L0 includes a plurality of lamp units, each with an LED as the light source. According to the present invention, however, the headlamp unit may be constituted of a single or a plurality of lamp units including a discharge light, a halogen bulb, an incandescent bulb, or the like as the light source.

## Claims

1. A vehicle lighting device that emits a spot-type light distribution pattern to be merged with a basic light distribution pattern (LP) having cutoff lines (CL1, CL2, CL3), comprising:
a semiconductor light source (1) including a plurality of light emitters (51, 52, 53) each having at least one straight side, wherein
said light emitters (51, 52, 53) comprising a first (51), a second (52) and a third light emitter (53) are offset to each other in a side direction (L; R), and
said second light emitter (52) is offset in an upper direction (VU) with respect to said first light emitter (51); and
a lens (2) that emits lights, each representative of an image (I1, I2, I3), from the light emitters (51, 52, 53) as the spot-type light distribution pattern (SP),
**characterized in**
**that** said second light emitter (52) is offset in a front direction (F) with respect to said first light emitter (51); and
**that** said third light emitter (53) is offset in an upper (VU) and front direction (F) with respect to said second light emitter (52), is centered on a center (53C) of the third light emitter (53) and is rotated around a rotation axis almost parallel to an axis (Z) conforming to an optical axis (Z-Z) of the lens (2).

2. The vehicle lighting device according to claim 1, **characterized in**
**that** each of the light emitter (51, 52, 53) has a rectangular shape having four straight sides corresponding to the straight side of corresponding image (I1, I2, I3),
**that** an upper straight side of said images (I1, I2, I3) has a conjoint line,
**that** said conjoint line corresponds to an upper horizontal cutoff line (CL1) of the basic light distribution pattern (LP).

3. The vehicle lighting device according to claim 2, **characterized in**
**that** the basic light distribution pattern (LP) has an upper horizontal cutoff line (CL1), an oblique cutoff line (CL2) and a lower horizontal cutoff line (CL3),
**that** a center (51C) of said first light emitter (51) is provided at a focal point (F0) or near the focal point (F0) of said lens (2), and
**that** said second (52) and third light emitter (53) are arranged on a left or right side of said first light emitter (51).

4. The vehicle lighting device according to claim 1, **characterized in that**
of the lens (2) constituted of a composite lens (2), a plane of incidence into which lights from the light emitters (51, 52, 53) are made incident shares an identical plane.

5. The vehicle lighting device according to claim 1, **characterized in**
**that** the lens (2) is integrally composed of convex-shaped first and second aspherical lens (2) units having different effective diameters, and
**that** the first aspherical lens (2) unit having the smaller effective diameter is enclosed by the second aspherical lens (2) unit having the greater effective diameter.

6. The vehicle lighting device according to claim 1, **characterized in**
**that** the lens (2) is integrally composed of convex-shaped first and second aspherical lens (2) units having different effective diameters, and
**that** a height of the first aspherical lens (2) unit is almost equivalent to or higher than that of the second aspherical lens (2) unit.

7. The vehicle lighting device according to claim 1, **characterized in**
**that** the lens (2) is integrally composed of convex-shaped first and second aspherical lens (2) units having different effective diameters, and
**that** to a boundary surface between a plane of emergence, of the first aspherical lens (2) unit, from which lights from the light emitters:(51, 52, 53) are emitted and a plane of emergence, of the second aspherical lens (2) unit, from which lights from the light emitters (51, 52, 53) are emitted, a surface treatment to lower light transmittance is applied.

8. The vehicle lighting device according to claim 1, **characterized in**
**that** the lens (2) is integrally composed of convex-shaped first and second aspherical lens (2) units having different effective diameters, and
**that** an optical axis that passes through a focal point of the second aspherical lens (2) unit is offset upward with respect to an optical axis that passes through the first aspherical lens (2) unit.

9. The vehicle lighting device according to claim 1, **characterized in**
**that** the basic light distribution pattern (LP) is a light distribution pattern having an upper horizontal cutoff line (CL1), an oblique cutoff line (CL2), and a lower horizontal cutoff line (CL3),
**that** said first light emitter (51) is centered on a center (51C) of the first light emitter (51) and is rotated 45° around a rotation axis almost parallel to an axis (Z) conforming to an optical axis (Z-Z) of the lens (2),
**that** an upper straight side of a second (12) and a third image (13) emitted by said second (52) and third light emitter (53) have a conjoint line,
**that** said conjoint line corresponds to an upper horizontal cutoff line (CL1) of the basic light distribution pattern (LP),
**that** a first image (I100) emitted by said first light emitter (51) has an upper right oblique side, and
**that** said upper right oblique side of said first image (I100) corresponds to said oblique cutoff line (CL2) of said basic light distribution pattern (LP).

10. The vehicle lighting device according to claim 1, **characterized in**
**that** of the lens (2), a left part and a right part are alternately displaced in the vertical direction, and
**that** of the spot-type light distribution pattern, a left part and a right part are alternately displaced in the vertical direction.

11. A vehicle headlamp unit that respectively emits a basic light distribution pattern (LP) having cutoff lines (CL1, CL2, CL3) and a spot-type light distribution pattern (SP), comprising:
a headlamp unit (LO) that outwardly emits the basic light distribution pattern (LP) having cutoff lines (CL1, CL2, CI3); and
at least one spot lamp unit (SL) that outwardly emit the spot-type light distribution pattern (SP), **characterized in**
**that** the spot lamp unit (SL) is the vehicle lighting device according to any one of claims 1 to 10.

## Patentansprüche

1. Fahrzeugbeleuchtungsvorrichtung, die ein punktartiges Lichtverteilungsmuster aussendet, das mit einem Grundlichtverteilungsmuster (LP) mit Begrenzungslinien (CL1, CL2, CL3) gemischt werden soll, umfassend:
eine Halbleiterlichtquelle (1), die eine Mehrzahl von Lichtsendern (51, 52, 53) beinhaltet, von denen jeder wenigstens eine gerade Seite aufweist, wobei die Lichtsender (51, 52, 53), die einen ersten (51), einen zweiten (52) und einen dritten (53) Lichtsender umfassen, zueinander in einer Seitenrichtung (L; R) versetzt sind, und der zweite Lichtsender (52) in einer oberen Richtung (VU) in Bezug auf den ersten Lichtsender (51) versetzt ist; und
eine Linse (2) zum Aussenden von Lichtern zur jeweiligen Darstellung eines Bildes (11, I2, I3) von den Lichtsendern (51, 52, 53) als das punktartige Lichtverteilungsmuster (SP),
**dadurch gekennzeichnet, dass**
der zweite Lichtsender (52) in einer vorderen (F) Richtung in Bezug auf den ersten Lichtsender (51) versetzt ist; und
der dritte Lichtsender (53) in einer oberen (VU) und einer vorderen (F) Richtung in Bezug auf den zweiten Lichtsender (52) versetzt ist, an einer Mitte (53C) des dritten Lichtsenders (53) zentriert ist und um eine Drehachse nahezu parallel zu einer Achse (Z) in Übereinstimmung mit einer optischen Achse (Z-Z) der Linse (2) gedreht ist.

2. Fahrzeugbeleuchtungsvorrichtung nach Anspruch 1, **dadurch gekennzeichnet, dass**
jeder der Lichtsender (51, 52, 53) eine Rechteckform mit vier geraden Seiten entsprechend der geraden Seite des entsprechenden Bildes (I1, I2, I3) aufweist,
dass eine obere gerade Seite der Bilder (I1, I2, I3) eine gemeinsame Linie aufweist dass die gemeinsame Linie einer oberen horizontalen Begrenzungslinie (CL1) des Grundlichtverteilungsmusters (LP) entspricht.

3. Fahrzeugbeleuchtungsvorrichtung nach Anspruch 2, **dadurch gekennzeichnet, dass**
das Grundlichtverteilungsmuster (LP) eine obere horizontale Begrenzungslinie (CL1), eine schräge Begrenzungslinie (CL2) und eine untere horizontale Begrenzungslinie (CL3) aufweist,
dass eine Mitte (51 C) des ersten Lichtsenders (51) an einem Brennpunkt (F0) oder nahe dem Brennpunkt (F0) der Linse (2) vorgesehen ist und
dass der zweite (52) und dritte (53) Lichtsender auf einer linken oder rechten Seite des ersten Lichtsenders (51) angeordnet ist.

4. Fahrzeugbeleuchtungsvorrichtung nach Anspruch 1, **dadurch gekennzeichnet, dass**
eine Einfallsebene, in die Lichtstrahlen von den Lichtsendern (51, 52, 53) einfallen, der aus einer zusammengesetzten Linse (2) gebildeten Linse (2) eine identische Ebene nutzt.

5. Fahrzeugbeleuchtungsvorrichtung nach Anspruch 1, **dadurch gekennzeichnet, dass**
die Linse (2) integral aus konvexförmigen ersten und zweiten asphärischen Linsen (2) aufweisenden Einheiten mit verschiedenen effektiven Durchmessern zusammengesetzt ist und
dass die die erste asphärische Linse (2) aufweisende Einheit mit dem kleineren effektiven Durchmesser von der die zweite asphärische Linse (2) aufweisenden Einheit mit dem größeren effektiven Durchmesser eingeschlossen ist.

6. Fahrzeugbeleuchtungsvorrichtung nach Anspruch 1, **dadurch gekennzeichnet, dass**
die Linse (2) integral aus eine konvexförmige erste und zweite asphärische Linse (2) aufweisenden Einheiten mit verschiedenen effektiven Durchmessern zusammengesetzt ist und
dass eine Höhe der die erste asphärische Linse (2) aufweisenden Einheit nahezu gleich oder größer als diejenige der die zweite asphärische Linse (2) aufweisenden Einheit ist.

7. Fahrzeugbeleuchtungsvorrichtung nach Anspruch 1, **dadurch gekennzeichnet, dass**
die Linse (2) integral aus eine konvexförmige erste und zweite asphärische Linse (2) aufweisenden Einheiten mit verschiedenen effektiven Durchmessern zusammengesetzt ist und
dass an einer Grenzoberfläche zwischen einer Austrittsebene der die erste asphärische Linse (2) aufweisenden Einheit, aus der Lichter von den Lichtsendern (51, 52, 53) ausgesendet werden, und einer Austrittsebene der die zweite asphärische Linse (2) aufweisenden Einheit, aus der Lichter von den Lichtsendern (51, 52, 53) ausgesendet werden, eine Oberflächenbehandlung zur Absenkung der Lichtdurchlässigkeit vorgenommen ist.

8. Fahrzeugbeleuchtungsvorrichtung nach Anspruch 1, **dadurch gekennzeichnet, dass**
die Linse (2) integral aus eine konvexförmige erste und zweite asphärische Linse (2) aufweisenden Einheiten mit unterschiedlichen effektiven Durchmessern zusammengesetzt ist und
das eine optische Achse, die durch einen Brennpunkt der die zweite asphärische Linse (2) aufweisenden Einheit läuft, in Bezug auf eine optische Achse, die durch die die erste asphärische Linse (2) aufweisende Einheit läuft, nach oben versetzt ist.

9. Fahrzeugbeleuchtungsvorrichtung nach Anspruch 1, **dadurch gekennzeichnet, dass**
das Grundlichtverteilungsmuster (LP) ein Lichtverteilungsmuster mit einer oberen horizontalen Begrenzungslinie (CL1), einer schrägen Begrenzungslinie (CL2) und einer unteren horizontalen Begrenzungslinie (CL3) ist,
dass der erste Lichtsender (51) an einer Mitte (51 C) des ersten Lichtsenders (51) zentriert ist und um 45° um eine Drehachse nahezu parallel zu einer Achse (Z-Z) in Übereinstimmung mit einer optischen Achse (Z-Z) der Linse (2) gedreht ist,
dass eine obere gerade Seite eines zweiten (12) und eines dritten (I3) Bildes, das von den zweiten (52) und dritten (53) Lichtsendern ausgesendet wird, eine gemeinsame Linie aufweist,
dass die gemeinsame Linie einer oberen horizontalen Begrenzungslinie (CL1) des Grundlichtverteilungsmusters (LP) entspricht,
dass ein erstes Bild (I100), das von dem ersten Lichtsender (51) ausgesendet wird, eine obere rechte schräge Seite aufweist, und
dass die obere rechte schräge Seite des ersten Bildes (I100) der schrägen Begrenzungslinie (CL2) des Grundlichtverteilungsmusters (LP) entspricht.

10. Fahrzeugbeleuchtungsvorrichtung nach Anspruch 1, **dadurch gekennzeichnet, dass**
ein linker Teil und ein rechter Teil der Linse (2) abwechselnd in der vertikalen Richtung versetzt sind und
dass ein linker Teil und ein rechter Teil des punktartigen Lichtverteilungsmusters abwechselnd in der vertikalen Richtung versetzt sind.

11. Fahrzeugscheinwerfereinheit, die jeweils ein Grundlichtverteilungsmuster (LP) mit Begrenzungslinien (CL1, CL2, CL3) und ein punktartiges Lichtverteilungsmuster (SP) aussendet, umfassend:
eine Scheinwerfereinheit (L0), die das Grundlichtverteilungsmuster (LP) mit Begrenzungslinien (CL1, CL2, CL3) nach außen aussendet; und
wenigstens eine Punktlampeneinheit (SL), die das punktartige Lichtverteilungsmuster (SP) nach außen aussendet, **dadurch gekennzeichnet, dass**
die Punktlampeneinheit (SL) die Fahrzeugbeleuchtungsvorrichtung nach einem der Ansprüche 1 bis 10 ist.

## Revendications

1. Dispositif d'éclairage de véhicule qui émet un modèle de distribution de lumière du type spot à fusionner avec un modèle de distribution de lumière de base (LP) qui présente des lignes de coupure (CL1, CL2, CL3), comprenant :
une source de lumière à semi-conducteur (1) contenant plusieurs émetteurs de lumière (51, 52, 53) qui ont chacun un côté rectiligne, étant précisé
que les émetteurs de lumière (51, 52, 53) comprenant un premier (51), un deuxième (52) et un troisième émetteur de lumière (53) sont décalés les uns par rapport aux autres dans une direction latérale (L ; R), et
que le deuxième émetteur de lumière (52) est décalé dans un sens supérieur (VU) par rapport au premier émetteur de lumière (51) ; et
une lentille (2) qui émet des lumières représentatives chacune d'une image (I1, I2, I3), à partir des émetteurs de lumière (51, 52, 53), comme modèle de distribution de lumière du type spot (SP),
**caractérisé en ce que** le deuxième émetteur de lumière (52) est décalé dans une direction avant (F) par rapport au premier émetteur de lumière (51) ; et
**en ce que** le troisième émetteur de lumière (53) est décalé dans des directions supérieure (VU) et avant (F) par rapport au deuxième émetteur de lumière (52), est centré sur un centre (53C) du troisième émetteur de lumière (53) et est tourné autour d'un axe de rotation presque parallèle à un axe (Z) correspondant à un axe optique (Z-Z) de la lentille (2).

2. Dispositif d'éclairage de véhicule selon la revendication 1, **caractérisé**
**en ce que** chacun des émetteurs de lumière (51, 52, 53) a une forme rectangulaire avec quatre côtés rectilignes qui correspondent au côté rectiligne de l'image correspondante (I1, I2, I3),
**en ce qu'**un côté rectiligne supérieur des images (I1, I2, I3) a une ligne conjointe,
**en ce que** ladite ligne conjointe correspond à une ligne de coupure horizontale supérieure (CL1) du modèle de distribution de lumière de base (LP).

3. Dispositif d'éclairage de véhicule selon la revendication 2, **caractérisé**
**en ce que** le modèle de distribution de lumière de base (LP) a une ligne de coupure horizontale supérieure (CL1), une ligne de coupure oblique (CL2) et une ligne de coupure horizontale inférieure (CL3),
**en ce qu'**un centre (51C) du premier émetteur de lumière (51) est disposé au niveau d'un point focal (F0) ou près du point focal (F0) de la lentille (2), et
**en ce que** les deuxième (52) et troisième (53) émetteurs de lumière sont disposés sur un côté gauche ou droit du premier émetteur de lumière (51).

4. Dispositif d'éclairage de véhicule selon la revendication 1, **caractérisé en ce que** sur la lentille (2) constituée par une lentille composite (2), un plan d'incidence dans lequel les lumières provenant des émetteurs de lumière (51, 52, 53) sont rendues incidentes partage un plan identique.

5. Dispositif d'éclairage de véhicule selon la revendication 1, **caractérisé**
**en ce que** la lentille (2) se compose, d'une seule pièce, de première et seconde unités de lentille asphériques convexes (2) qui ont des diamètres effectifs différents, et
**en ce que** la première unité de lentille asphérique (2) qui présente le plus petit diamètre effectif est entourée par la seconde unité de lentille asphérique (2) qui présente le plus grand diamètre effectif.

6. Dispositif d'éclairage de véhicule selon la revendication 1, **caractérisé en ce que** la lentille (2) est composée, d'une seule pièce, de première et seconde unités de lentille asphériques convexes (2) qui ont des diamètres effectifs différents, et
**en ce qu'**une hauteur de la première unité de lentille asphérique (2) est presque équivalente ou supérieure à celle de la seconde unité de lentille asphérique (2).

7. Dispositif d'éclairage de véhicule selon la revendication 1, **caractérisé**
**en ce que** la lentille (2) se compose, d'une seule pièce, de première et seconde unités de lentille asphériques convexes (2) qui ont des diamètres effectifs différents, et
**en ce qu'**un traitement de surface pour réduire la transmission de lumière est appliqué sur une surface limite entre un plan d'émergence de la première unité de lentille asphérique (2) à partir duquel les lumières provenant des émetteurs de lumière (51, 52, 53) sont émises, et un plan d'émergence de la seconde lentille asphérique (2) à partir duquel les lumières provenant des émetteurs de lumière (51, 52, 53) sont émises.

8. Dispositif d'éclairage de véhicule selon la revendication 1, **caractérisé**
**en ce que** la lentille (2) est composée, d'une seule pièce, de première et seconde unités de lentille asphériques convexes (2) qui ont des diamètres effectifs différents, et
**en ce qu'**un axe optique qui traverse un point focal de la seconde unité de lentille asphérique (2) est décalée vers le haut par rapport à un axe optique qui traverse la première unité de lentille asphérique (2).

9. Dispositif d'éclairage de véhicule selon la revendication 1, **caractérisé**
**en ce que** le modèle de distribution de lumière de base (LP) est un modèle de distribution de lumière qui a une ligne de coupure horizontale supérieure (CL1), une ligne de coupure oblique (CL2) et une ligne de coupure horizontale inférieure (CL3),
**en ce que** le premier émetteur de lumière (51) est centré sur un centre (51C) du premier émetteur de lumière (51) et est tourné à 45° autour d'un axe de rotation presque parallèle à un axe (Z) correspondant à un axe optique (Z-Z) de la lentille (2),
**en ce qu'**un côté rectiligne supérieur d'une deuxième image (I2) et d'une troisième image (I3) émises par les deuxième (52) et troisième (53) émetteurs de lumière ont un ligne conjointe,
**en ce que** la ligne conjointe correspond à une ligne de coupure horizontale supérieure (CL1) du modèle de distribution de lumière de base (LP),
**en ce qu'**une première image (I100) émise par le premier émetteur de lumière (51) a un côté oblique droit supérieur, et
**en ce que** le côté oblique droit supérieur de la première image (I100) correspond à la ligne de coupure oblique (CL2) du modèle de distribution de lumière de base (LP).

10. Dispositif d'éclairage de véhicule selon la revendication 1, **caractérisé**
**en ce que** sur la lentille (2), une partie gauche et une partie droite sont déplacées en alternance dans le sens vertical, et
**en ce que** sur le modèle de distribution de lumière du type spot, une partie gauche et une partie droite sont déplacées en alternance dans le sens vertical.

11. Unité de phare de véhicule qui émet respectivement un modèle de distribution de lumière de base (LP) qui a des lignes de coupure (CL1, CL2, CL3), et un modèle de distribution de lumière du type spot (SP), comprenant :
une unité de phare (L0) qui émet vers l'extérieur le modèle de distribution de lumière de base (LP) présentant des lignes de coupure (CL1, CL2, CL3) ; et
au moins une unité de spot (SL) qui émet vers l'extérieur le modèle de distribution de lumière du type spot (SP), **caractérisée en ce que** l'unité de spot (SL) est constituée par le dispositif d'éclairage de véhicule selon l'une quelconque des revendications 1 à 10.
